# EUROPEAN PATENT SPECIFICATION

(11) **EP 3 935 959 B1**
(45) Date of publication and mention of the grant of the patent: **15.04.2026**
(21) Application number: 21180207.9
(22) Date of filing: 18.06.2021
(51) Int. Cl.: A23L 19/00, A23L 11/00

(54) **A METHOD AND SYSTEM FOR PROCESSING SEEDS INTO A PASTE-LIKE FOOD PRODUCT**
VERFAHREN UND SYSTEM ZUR VERARBEITUNG VON SAMEN ZU EINEM PASTÖSEN NAHRUNGSMITTELPRODUKT
PROCÉDÉ ET SYSTÈME DE TRANSFORMATION DE GRAINES EN UN PRODUIT ALIMENTAIRE PÂTEUX

(30) Priority: 09.07.2020 EP 20184853
(43) Date of publication of application: 12.01.2022
(73) Proprietor: Tetra Laval Holdings & Finance S.A., 1009 Pully (CH)
(72) Inventor: BÖRJESSON, Erik, 227 32 Lund (SE); ARPH, Helena, 247 32 Södra Sandby (SE); Lindqvist, Jan, 256 55 Helsingborg (SE); BHATT, Karmini, 224 57 Lund (SE)
(74) Representative: Tetra Pak Patent Attorneys

(56) References cited:
- EP-A1- 3 136 877
- EP-B1- 3 136 877
- JP-A- 2009 213 409
- US-A1- 2003 213 585

## Description

### Technical Field

The invention relates to food processing. More particularly, it is related to methods and systems for processing seeds into a paste-like food product.

### Background Art

In food processing systems of today, heat treatment is commonly used for reducing a number of unwanted microorganisms in food products, such as bacteria and spores, which otherwise could deteriorate the food products or even worse pose a health risk for a consumer. There are different types of heat treatment devices available today. For instance, plate heat exchangers (PHE) are commonly used for pasteurizing milk in dairies. Tubular heat exchangers (THE) can also be used. For high-viscous food products, such as jams, peanut butter and dressings, scraped surface heat (SSHE) exchangers are commonly used. Unlike the PHEs and the THEs, the SSHEs comprise rotating blades that move the food product such that efficient heating of the high-viscous product can be achieved.

Providing safe food products is however not only about heating to eliminate unwanted microorganisms but also cooling the food product in an efficient manner such that harmful bacterial growth can be prevented. For instance, when producing hummus, once it is heated it should be cooled down quickly to avoid that that bacteria may develop in the product.

Since food products without added preservatives are increasingly popular among consumers, there is an increasing demand for heat treatment processes that can eliminate microorganisms. However, heat treating high-viscous products, such as hummus, comes with challenges. One such challenge is that when quickly cooling down the food product, after being mixed and heat treated, there is usually a high pressure drop when conveying the hummus further in the process. The high pressure drop is due to the high viscosity of the product. This high pressure drop makes it necessary to use additional or larger pumps, which increases total cost of operation.

The general principle presented above may be embodied in different ways. For instance, hummus and other similar products can be produced by using a SSHE in combination with a coil heat exchanger. Even though this set up provides for continuous production, it is an investment that is relatively large for some producers. Using this set up it is possible to achieve a cooling time for hummus of 20-25 minutes for a 2000-3000 kg batch.

A more cost-efficient alternative to the set up presented above is to use a high shear mixer with a jacket for heat transfer media. The high shear mixer provides for that ingredients are mixed and by introducing e.g. hot water into the jacket the food product can be heated. To cool the food product, cool water may be introduced into the jacket. This batch approach is more cost efficient in terms of equipment cost, but in terms of production time this approach is less efficient. Using the mixer approach, 3-5 hours is usually needed for cooling the 2000-3000 kg batch.

As presented above, even though there are different alternatives for treating hummus and similar products, there is a need for more efficient set ups for production of hummus and similar products, both in terms of cooling time as well as equipment costs. Related prior art is described in patent documents EP3136877A1 and US2003213585 A1.

### Summary

It is an object of the invention to overcome at least partly one or more of the above-identified limitations of the prior art. In particular, it is an object to provide a cost efficient and reliable system for producing paste-like food products, such as hummus.

According to a first aspect it is provided a method for processing seeds into a paste-like food product, said method comprising mixing the seeds into the paste-like product by using a mixer, heating the paste-like product by using the mixer, transferring the paste-like product to a tank, and circulating the paste-like product over the tank (108) and a heat exchanger through which a cooling media flows, by feeding the paste-like product from the tank to the heat exchanger, and feeding the paste-like product (104) from the heat exchanger to the tank, such that the paste-like product is cooled.

An advantage with the method presented above is cost efficiency. The mixer can be used both for mixing and heating. However, instead of using the mixer also for cooling, the paste-like food product is fed to the tank and the heat exchanger for cooling. By using the tank and the heat exchanger for cooling, cooling time for a batch of 2000-3000 kg to 4-10° C can be reduced from approximately 3-5 hours to 45-60 minutes.

The seeds may be chickpeas and the paste-like food product may be a mixture comprising ground chickpeas and tahina.

An example of the mixture is hummus. For hummus, there is a risk that e.g. listeria is developed if this is not heated and cooled correctly during production. Having the process above, in which the cooling time can be reduced, the risk of bacterial growth, such as listeria, can be reduced.

A temperature of the paste-like product fed from the mixer may be 40-100 °C, more particularly 60-90 °C.

The method may further comprise moving the paste-like product horizontally in the tank by using an agitator.

Having the agitator placed in tank provides for that the paste-like product in the tank can be moved horizontally. This in turn provides for that there is less risk that there is product in the tank that is not circulated over the heat exchanger, since the horizontal movement may ensure that the product is evenly moved towards an outlet in the tank and from there further to the heat exchanger.

The heat exchanger may be a tubular heat exchanger.

An advantage with using tubular heat exchangers is cost efficiency. Compared to other types of equipment used for cooling paste-like food product, the tubular heat exchanger is less costly.

The tubular heat exchanger may be a multitube heat exchanger having multiple inner tubes provided in an outer tube, the paste-like product flowing in the inner tubes and the cooling media flowing in outer tube.

Compared to prior art alternatives for cooling the paste-like food product, a pressure drop is relatively low if using the multitube heat exchanger.

The method may further comprise mixing a second batch of seeds into a second batch of paste-like food product by using the mixer, and heating the second batch of paste-like product by using the mixer, while at the same time circulating over the tank and the heat exchanger the paste-like product previously mixed, heated and transferred to the tank.

An advantage of handling two batches at the same time is that a steady flow of product may be provided to e.g. a filling machine.

The method may further comprise transferring the second batch of paste-like product to an alternate tank.

The paste-like product may be fed through the inner tubes of the heat exchanger by a velocity that is in the range of 0,1 to 0,6 m/s.

Each of the inner tubes may have a straight section having a length (L) that is less than 8 meter.

Each of the inner tubes may have a cross-sectional area (CSA) that is less than 5 cm².

The method may further comprise, prior to the step of transferring the paste-like product to the tank, passing the paste-like food product through a holding cell placed downstream the mixer and upstream the tank, to secure that the paste-like food product is kept at a predetermined temperature for a minimum period of time.

Having the holding cell provides for reducing the risk that the food product is not properly heat treated.

According to a second aspect it is provided a system for processing seeds into a paste-like product, said system comprising a mixer arranged to mix the seeds into the paste-like product and to heat the paste-like product, a first fluid line arranged to transfer the paste-like product from the mixer to a tank, and a second fluid line arranged to circulate the paste-like product over the tank and a heat exchanger that is configured to receive cooling media for cooling the paste-like product, wherein the second fluid line comprises a tank-to-heat exchanger pipe, providing for that the paste-like product can be fed from the tank to the heat exchanger, and a heat exchanger-to-tank pipe, providing for that the paste-like product can be fed from the heat exchanger to the tank.

The system may further comprise an alternate tank fluidly connected to the mixer via the first fluid transfer arrangement and to the heat exchanger via a third fluid transfer arrangement, wherein the heat exchanger may be arranged to circulate the paste-like product over the alternate tank using the third fluid transfer arrangement, and a valve arrangement arranged to alternately direct the paste-like product to the tank and the alternate tank such that the paste-like food product from a subsequent batch is filled into an alternate tank while the paste-like product is circulated over the tank and the heat exchanger.

The system may further comprise a filling machine placed downstream the tank and the alternate tank, and connected to the tank and the alternate tank via a fourth fluid transfer arrangement, and a control device configured to control the valve arrangement such that the alternate tank is emptied while the paste-like product is circulated over the tank and the heat exchanger, thereby providing for a steady flow of the paste-like product via the fourth fluid transfer arrangement to the filling machine.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1D illustrates a cross-sectional side view of the heat exchanger of the system.
Fig. 2 is a flow chart comprising steps for processing seeds into a paste-like food product.

### Detailed description

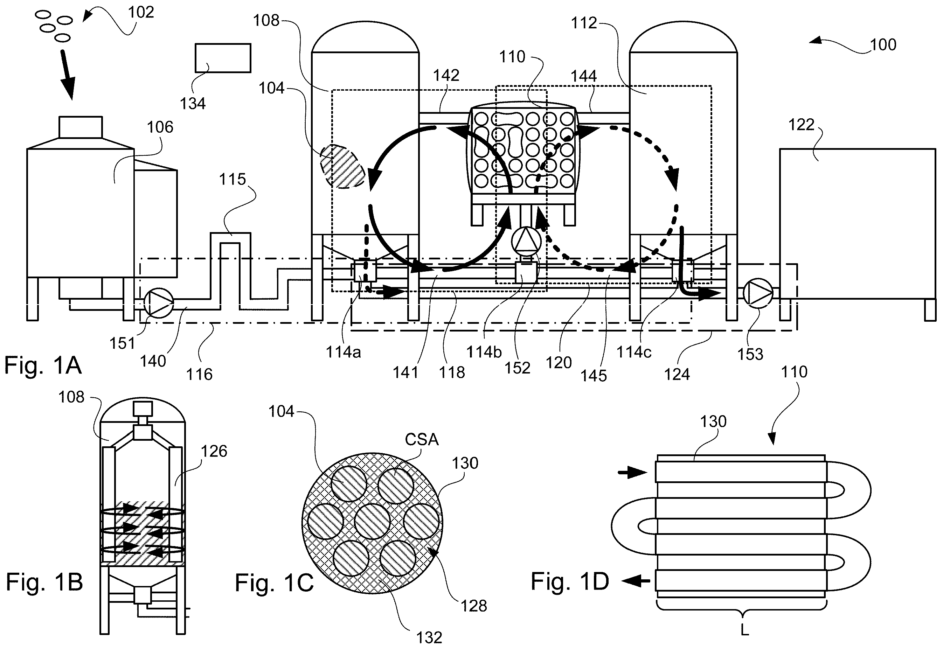

Fig. 1A illustrates a system 100 for processing seeds 102 into a paste-like food product 104. In the example below, reference is made to hummus produced from seeds in the form of chickpeas, but the principles laid forward can also be applied for other types of seeds including various types of beans and nuts.

The seeds 102 can be fed into a mixer 106. Before being fed into the mixer 106, the seeds 102 may be processed in different ways. For instance, in the current example of hummus, the chickpeas can be soaked in water before being fed into the mixer 106. The mixer 106 can be provided with a grinder element (not illustrated) such that the seeds can be grinded as they are fed into the mixer 106. The mixer may be a high shear mixer, which provides for an efficient mixing of the seeds and possible other ingredients, such as tahina, vegetable oil and spices in case hummus is produced.

To eliminate microorganisms that can deteriorate the food product, heat is provided by having the mixer 106 provided with a jacket in which a heat transfer fluid may be provided, such as hot water or steam. Thus, the food product may be mixed and heated simultaneously or subsequently by the same piece of equipment. As an example, a temperature of the paste-like product 104 fed from the mixer 106 is 40-100 °C, more particularly 60-90 °C. Steam may also be injected into the mixer 106.

After being mixed and heated, the food product 104 can be fed into a tank 108. The tank 108 is in turn fluidly connected to a heat exchanger 110 such that the food product 104 can be circulated over the tank 108 and the heat exchanger 110. The heat exchanger 110 may be a tubular heat exchanger (THE). An advantage with this is that a cooling time of approximately 45-60 minutes for a 2000-3000 kg batch can be achieved, that the pressure drop is lower compared to e.g. a scraped surface heat exchanger (SSHE) and at a lower equipment cost compared to e.g. the SSHE.

To provide a steady flow of the food product 104, an alternate tank 112 may be provided. As the tank 108, the alternate tank 112 is also fluidly connected to the heat exchanger 110 such that the food product can be circulated over the heat exchanger 110 and the alternate tank 112. Having two tanks in this way provides for that while the food product is fed out from the tank 108, the food product 104 in the alternate tank 112 can be cooled by circulating over the heat exchanger 110, and vice versa. In addition to providing the steady flow to equipment downstream, a utilization rate of the heat exchanger 110 and the mixer 106 can be kept high.

A valve arrangement 114a, 114b, 114c can be used for switching between circulation over the tank 108 and the heat exchanger 110, and the alternate tank 112 and the heat exchanger 110. In the illustrated example, a first valve 114a is provided in connection to the tank 108, a second valve 114b in connection to the heat exchanger 110, and a third valve 114c in connection to the alternate tank 112.

Further, a holding cell 115, sometimes referred to as holding tube, can be provided downstream the mixer 106 and upstream the tank 108 and alternate tank 112. Having the holding cell 115 is advantageous in that it can be assured that the food product is kept at a pre-determined temperature for a minimum period of time. This is accomplished by using a defined length and cross-sectional area for the holding tube 115, and by controlling the rate by which product is pumped through the holding tube 115.

To feed the food product 104 from the mixer 106 to the tank 108, the heat exchanger 110 and the alternate tank 112, a combination of pipes, pumps 151, 152, 153 and valves 114a, 114b, 114c may be used. This combination may form a first fluid transfer arrangement 116 providing for that the food product 104 can be fed to the tank 108, the heat exchanger 110 and the alternate tank 112, a second fluid transfer arrangement 118 that can provide for that the food product 104 can be recirculated over the tank 108 and the heat exchanger 110, a third fluid transfer arrangement 120 that can provide for that the food product 104 can be recirculated over the alternate tank 112 and the heat exchanger 110, and, provided that a filling machine 122 is placed downstream the tank 108 and alternate tank 112, a fourth fluid transfer arrangement 124 that can provide for that the food product 104, after being cooled, can be fed to the filling machine 122 from the tank 108 and the alternate tank 112.

An advantage with the system 100 is that a steady flow of the food product 104 can be provided to the filling machine 122. This is advantageous in that a buffer tank for the filling machine 122 can be omitted. The tank 108 and the alternate tank 112 may function as the buffer tank for the filing machine 122.

As illustrated by bolded arrows in fig. 1A, while cooling the food product 104 by having this recirculated over the tank 108 and the heat exchanger 110, the food product 104 in the alternate tank 112, which is already cooled down, can be fed to the filling machine 122. As indicated by slotted arrows, once the food product 104 in the tank 108 has been cooled down and the food product 104 in the alternate tank 112 has been fed to the filling machine, the system 100 can be changed such that the food product 104 of the tank 108 is fed to the filling machine 122 and the food product 104 of the alternate tank 112 is recirculated over the heat exchanger 110.

With reference to fig. 1B, the tank 108, as well as the alternate tank 112, may be equipped with an agitator 126 to provide for that the food product 104 is moved within the tank, more particularly moved horizontally within the tank 108. An advantage with this is that a risk that some of the food product 104 is not adequately cooled down, that is not recirculated over the heat exchanger 110, can be reduced.

As illustrated in fig. 1C, inner tubes 128 of the heat exchanger 110 can hold the food product 104 and an outer tube 130, enclosing the inner tubes 128, can hold a cooling media 132, such as cold water. A cross-sectional area (CSA) for a single inner tube may be less than 5 cm². The paste-like product 104 can be fed through the inner tubes 128 by a velocity that is in the range of 0,1 to 0,6 m/s.

Fig. 1D illustrates a cross-sectional side perspective of the heat exchanger 110, exemplified as the THE. As illustrated, outer tubes 130 can be connected such that the food product 104 can be fed back and forward in the THE. By having possibility to adapt the THE by connecting the outer tubes 130 in different ways, the THE can be adapted to meet desired cooling requirements. A straight section of the inner tubes 128, provided inside the outer tube 130, can have a length (L) that is less than 8 meter.

Returning to fig. 1A, a controller 134 may be used for capturing sensor data from the different parts of the system, e.g. temperature measurements from the tank 108 and the alternate tank 112, process this sensor data, and transmit control data to the different parts of the system 100 such circulation may be performed until the desired temperature is reached for the product.

Further, a first fluid line 140 that is arranged to transfer the paste-like product 104 from the mixer 106 to the tank 108 is provided. A second fluid line 141, 142 is arranged to circulate the paste-like product 104 over the tank 108 and the heat exchanger 110 that is configured to receive cooling media 132 for cooling the paste-like product 104. This second fluid line 141, 142 can comprise a tank-to-heat exchanger pipe 141, providing for that the food product can be fed from the tank to the heat exchanger 110, and a heat exchanger-to-tank pipe 142, providing for that the food product 104 can be fed from the heat exchanger 110 to the tank 108. A third fluid line 144, 145 can be arranged to circulate the paste-like product 104 over the alternate tank 112 and the heat exchanger 110. This third fluid line 144, 145 can comprise a heat exchanger-to-alternate tank pipe 144, providing for that the food product can be fed from the heat exchanger 110 to the alternate tank 112, and an alternate tank-to-heat exchanger pipe 145, providing for that the food product 104 can be fed from the alternate tank 112 to the heat exchanger 110.

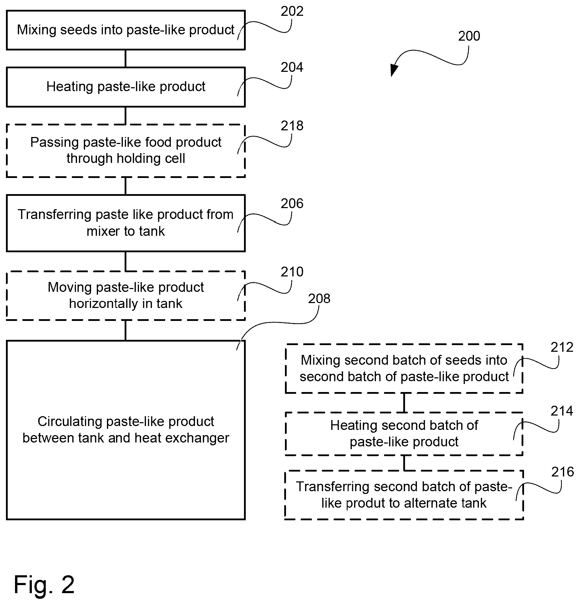

Fig. 2 is a flow chart illustrating a method 200 for processing the seeds 102 into the paste like food product 104. In a first step 202, the seeds 102 are mixed into the paste-like food product by using the mixer 106. At the same time or after being mixed, in a second step 204, the paste-like food product 104 is heated by using the mixer 106. As described, this can be achieved by providing hot water into the jacket of the mixer 106 or by providing steam to the seeds inside the mixer.

Next, in a third step 206, the paste-like food product can be transferred to the tank 108. Thereafter, to cool the paste-like food product 104, in a fourth step 208, the paste-like product 104 can be circulated over the tank 108 and the heat exchanger 110 through which the cooling media 132 flows, such that the paste-like product 104 is cooled.

Optionally, in a fifth step 210, the paste-like product 104 can be horizontally moved in the tank 108 by using the agitator 126. An advantage with this is that the product 104 is cooled down evenly, that is, the risk of having product 104 in the tank 108 that is not circulated is reduced.

In addition, in a sixth step 212, a second batch of seeds 102 may be mixed into a second batch of paste-like food product 104 by using the mixer 106, and, in a seventh step 214, the second batch of paste-like product 104 can be heated by using the mixer 106, at the same time as the fourth step 208 is performed, i.e. circulating 208 the paste-like product 104 previously mixed, heated and transferred to the tank 108 over the tank 108 and the heat exchanger 110. In an eighth step 216, the second batch of paste-like product 104 may be transferred to the alternate tank 112.

Further, prior to the third step 206, the paste-like food product 104 may pass 218 through the holding cell 115 placed downstream the mixer 106 and upstream the tank 108, to secure that the paste-like food product 104 is kept at a predetermined temperature for a minimum period of time.

## Claims

1. A method (200) for processing seeds (102) into a paste-like food product (104), said method comprising
mixing (202) the seeds (102) into the paste-like product (104) by using a mixer (106),
heating (204) the paste-like product (104) by using the mixer (106),
transferring (206) the paste-like product (104) to a tank (108), and **characterized by**
circulating (208) the paste-like product (104) over the tank (108) and a heat exchanger (110) through which a cooling media (132) flows, by feeding the paste-like product (104) from the tank (108) to the heat exchanger (110), and feeding the paste-like product (104) from the heat exchanger (110) to the tank (108), such that the paste-like product (104) is cooled.

2. The method (200) according to claim 1, wherein the seeds (102) are chickpeas, and the paste-like food product (104) is a mixture comprising ground chickpeas and tahina.

3. The method (200) according to any one of the preceding claims, wherein a temperature of the paste-like product fed from the mixer is in the range of 40 to 100 °C, or is in the range of 60 to 90 °C.

4. The method (200) according to any one of the preceding claims, comprising moving (210) the paste-like product horizontally in the tank (108) by using an agitator (126).

5. The method (200) according to any one of the preceding claims, wherein the heat exchanger (108) is a tubular heat exchanger.

6. The method (200) according to claim 5, wherein the tubular heat exchanger is a multitube heat exchanger having multiple inner tubes (128) provided in an outer tube (130), the paste-like product (104) flowing in the inner tubes (128) and the cooling media (132) flowing in outer tube (130).

7. The method (200) according to any one of the preceding claims, comprising
mixing (212) a second batch of seeds (102) into a second batch of paste-like food product (104) by using the mixer (106), and
heating (214) the second batch of paste-like product (104) by using the mixer (106), while at the same time
circulating (208) over the tank (108) and the heat exchanger (110) the paste-like product (104) previously mixed, heated and transferred to the tank (108).

8. The method (200) according to claim 7, comprising
transferring (216) the second batch of paste-like product (104) to an alternate tank (112).

9. The method (200) according to any one of the preceding claims, wherein the paste-like product (104) is fed through the inner tubes (128) of the heat exchanger (110) with a velocity that is in the range of 0,1 to 0,6 m/s.

10. The method (200) according to any one of the preceding claims, wherein each of the inner tubes (128) has a straight section having a length (L) that is less than 8 meters.

11. The method (200) according to any one of the preceding claims, wherein each of the inner tubes (128) has a cross-sectional area (CSA) that is less than 5 cm².

12. The method (200) according to any one of the preceding claims, further comprising, prior to the step of transferring (206) the paste-like product (104) to the tank (108),
passing (218) the paste-like food product (104) through a holding cell (115) placed downstream the mixer (106) and upstream the tank (108), to secure that the paste-like food product (104) is kept at a predetermined temperature for a minimum period of time.

13. A system (100) for processing seeds (102) into a paste-like product (104), said system (100) comprising
a mixer (106) arranged to mix the seeds (102) into the paste-like product (104) and to heat the paste-like product (104),
a first fluid line (140) arranged to transfer the paste-like product (104) from the mixer (106) to a tank (108), **characterized in that**
a second fluid line (141, 142) is arranged to circulate the paste-like product (104) over the tank (108) and a heat exchanger (110) that is configured to receive cooling media (132) for cooling the paste-like product (104) wherein the second fluid line (141, 142) comprises a tank-to-heat exchanger pipe (141), providing for that the paste-like product can be fed from the tank (108) to the heat exchanger (110), and a heat exchanger-to-tank pipe (142), providing for that the paste-like product (104) can be fed from the heat exchanger (110) to the tank (108).

## Patentansprüche

1. Verfahren (200) zum Verarbeiten von Samen (102) zu einem pastösen Lebensmittelprodukt (104), wobei das Verfahren umfasst
Mischen (202) der Samen (102) zu dem pastösen Produkt (104) unter Verwendung eines Mischers (106),
Erhitzen (204) des pastösen Produkts (104) unter Verwendung des Mischers (106),
Überführen (206) des pastösen Produkts (104) zu einem Tank (108), und **gekennzeichnet durch**
Zirkulieren (208) des pastösen Produkts (104) über den Tank (108) und einen Wäemrtauscher (110), durch den ein Kühlmedium (132) strömt, durch Zuführen des pastösen Produkts (104) aus dem Tank (108) zu dem Wärmetauscher (110) und Zuführen des pastösen Produkts (104) aus dem Wärmetauscher (110) zu dem Tank (108), so dass das pastöse Produkt (104) gekühlt wird.

2. Verfahren (200) nach Anspruch 1, wobei die Samen (102) Kichererbsen sind und das pastöse Lebensmittelprodukt (104) ein Gemisch ist, das gemahlene Kichererbsen und Tahina umfasst.

3. Verfahren (200) nach einem der vorstehenden Ansprüche, wobei eine Temperatur des pastösen Produkts, das aus dem Mischer zugeführt wird, in dem Bereich von 40 bis 100 °C liegt oder in dem Bereich von 60 bis 90 °C liegt.

4. Verfahren (200) nach einem der vorstehenden Ansprüche, umfassend horizontales Bewegen (210) des pastösen Produkts in dem Tank (108) unter Verwendung eines Rührwerks (126).

5. Verfahren (200) nach einem der vorstehenden Ansprüche, wobei der Wärmetauscher (108) ein Röhrenwärmetauscher ist.

6. Verfahren (200) nach Anspruch 5, wobei der Röhrenwärmetauscher ein Mehrröhrenwärmetauscher mit mehreren Innenrohren (128) ist, die in einem Außenrohr (130) bereitgestellt sind, wobei das pastöse Produkt (104) in den Innenrohren (128) fließt und das Kühlmedium (132) in dem Außenrohr (130) fließt.

7. Verfahren (200) nach einem der vorstehenden Ansprüche, umfassend Mischen (212) einer zweiten Charge von Samen (102) zu einer zweiten Charge von pastösem Lebensmittelprodukt (104) unter Verwendung des Mischers (106), und
Erhitzen (214) der zweiten Charge von pastösem Produkt (104) unter Verwendung des Mischers (106), und gleichzeitig
Zirkulieren (208) des zuvor gemischten, erhitzten und zu dem Tank (108) überführten pastösen Produkts (104) über den Tank (108) und den Wärmetauscher (110).

8. Verfahren (200) nach Anspruch 7, umfassend
Überführen (216) der zweiten Charge von pastösem Produkt (104) zu einem alternativen Tank (112).

9. Verfahren (200) nach einem der vorstehenden Ansprüche, wobei das pastöse Produkt (104) durch die Innenrohre (128) des Wärmetauschers (110) mit einer Geschwindigkeit geführt wird, die in dem Bereich von 0,1 bis 0,6 m/s liegt.

10. Verfahren (200) nach einem der vorstehenden Ansprüche, wobei jedes der Innenrohre (128) einen geraden Abschnitt mit einer Länge (L), die weniger als 8 Meter beträgt, aufweist.

11. Verfahren (200) nach einem der vorstehenden Ansprüche, wobei jedes der Innenrohre (128) eine Querschnittsfläche (CSA), die weniger als 5 cm² beträgt, aufweist.

12. Verfahren (200) nach einem der vorstehenden Ansprüche, ferner umfassend, vor dem Schritt des Überführens (206) des pastösen Produkts (104) zu dem Tank (108),
Führen (218) des pastösen Lebensmittelprodukts (104) durch eine Haltezelle (115), die stromabwärts des Mischers (106) und stromaufwärts des Tanks (108) angeordnet ist, um sicherzustellen, dass das pastöse Lebensmittelprodukt (104) für einen Mindestzeitraum bei einer vorgegebenen Temperatur gehalten wird.

13. System (100) zum Verarbeiten von Samen (102) zu einem pastösen Produkt (104), wobei das System (100) umfasst
einen Mischer (106), angeordnet zum Mischen der Samen (102) zu dem pastösen Produkt (104) und zum Erhitzen des pastösen Produkts (104),
eine erste Fluidleitung (140), angeordnet zum Überführen des pastösen Produkt (104) von dem Mischer (106) zu einem Tank (108), **dadurch gekennzeichnet, dass**
eine zweite Fluidleitung (141, 142) angeordnet ist, um das pastöse Produkt (104) über den Tank (108) und einen Wärmetauscher (110), der dafür gestaltet ist, Kühlmedium (132) zum Kühlen des pastösen Produkts (104) aufzunehmen, zu zirkulieren, wobei die zweite Fluidleitung (141, 142) eine Tank-zu-Wärmetauscher-Leitung (141) umfasst, die gewährleistet, dass das pastöse Produkt aus dem Tank (108) dem Wärmetauscher (110) zugeführt werden kann, und eine Wärmetauscher-zu-Tank-Leitung (142), die gewährleistet, dass das pastöse Produkt (104) von dem Wärmetauscher (110) dem Tank (108) zugeführt werden kann.

## Revendications

1. Procédé (200) destiné à transformer des graines (102) en produit alimentaire pâteux (104), ledit procédé comprenant
le mixage (202) des graines (102) pour obtenir le produit pâteux (104) au moyen d'un mixeur (106),
le chauffage (204) du produit pâteux (104) au moyen du mixeur (106),
le transfert (206) du produit pâteux (104) dans une cuve (108), et **caractérisé par**
la circulation (208) du produit pâteux (104) entre la cuve (108) et un échangeur de chaleur (110) à travers lequel s'écoule un milieu de refroidissement (132), par avance du produit pâteux (104) de la cuve (108) à l'échangeur de chaleur (110) et avance du produit pâteux (104) de l'échangeur de chaleur (110) à la cuve (108), de telle sorte que le produit pâteux (104) soit refroidi.

2. Procédé (200) selon la revendication 1, dans lequel les graines (102) sont des pois chiches, et le produit alimentaire pâteux (104) est un mélange comprenant des pois chiches moulus et du tahini.

3. Procédé (200) selon l'une quelconque des revendications précédentes, dans lequel une température du produit pâteux que l'on fait avancer depuis le mixeur est comprise entre 40 et 100 °C, ou est comprise entre 60 et 90 °C.

4. Procédé (200) selon l'une quelconque des revendications précédentes, comprenant le déplacement horizontal (210) du produit pâteux dans la cuve (108) au moyen d'un agitateur (126).

5. Procédé (200) selon l'une quelconque des revendications précédentes, dans lequel l'échangeur de chaleur (108) est un échangeur de chaleur tubulaire.

6. Procédé (200) selon la revendication 5, dans lequel l'échangeur de chaleur tubulaire est un échangeur de chaleur multitube ayant de multiples tubes internes (128) disposés dans un tube externe (130), le produit pâteux (104) s'écoulant dans les tubes internes (128) et le milieu de refroidissement (132) s'écoulant dans le tube externe (130).

7. Procédé (200) selon l'une quelconque des revendications précédentes, comprenant le mixage (212) d'un deuxième lot de graines (102) pour obtenir un deuxième lot de produit alimentaire pâteux (104) au moyen du mixeur (106), et
le chauffage (214) du deuxième lot de produit pâteux (104) au moyen du mixeur (106), et dans le même temps,
la circulation (208) entre la cuve (108) et l'échangeur de chaleur (110) du produit pâteux (104) préalablement mixé, chauffé et transféré dans la cuve (108).

8. Procédé (200) selon la revendication 7, comprenant le transfert (216) du deuxième lot de produit pâteux (104) dans un autre cuve (112).

9. Procédé (200) selon l'une quelconque des revendications précédentes, dans lequel on fait avancer le produit pâteux (104) à travers les tubes internes (128) de l'échangeur de chaleur (110) à une vitesse qui est comprise entre 0,1 et 0,6 m/s.

10. Procédé (200) selon l'une quelconque des revendications précédentes, dans lequel chacun des tubes internes (128) a une section rectiligne ayant une longueur (L) qui est inférieure à 8 mètres.

11. Procédé (200) selon l'une quelconque des revendications précédentes, dans lequel chacun des tubes internes (128) a une aire de section transversale (CSA) qui est inférieure à 5 cm².

12. Procédé (200) selon l'une quelconque des revendications précédentes, comprenant en outre, avant l'étape de transfert (206) du produit pâteux (104) dans la cuve (108),
le passage (218) du produit alimentaire pâteux (104) à travers une cellule de maintien (115) placée en aval du mixeur (106) et en amont de la cuve (108), de manière à garantir que le produit alimentaire pâteux (104) est maintenu à une température prédéterminée pendant une durée minimale.

13. Système (100) destiné à transformer des graines (102) en produit pâteux (104), ledit système (100) comprenant
un mixeur (106) agencé pour mixer les graines (102) afin d'obtenir le produit pâteux (104) et pour chauffer le produit pâteux (104),
une première conduite de fluide (140) agencée pour transférer le produit pâteux (104) depuis le mixeur (106) dans une cuve (108), **caractérisé en ce que**
une deuxième conduite de fluide (141, 142) est agencée pour faire circuler le produit pâteux (104) entre la cuve (108) et un échangeur de chaleur (110) qui est conçu pour recevoir un milieu de refroidissement (132) destiné à refroidir le produit pâteux (104), la deuxième conduite de fluide (141, 142) comprenant un tuyau (141) allant de la cuve à l'échangeur de chaleur permettant de faire avancer le produit pâteux de la cuve (108) à l'échangeur de chaleur (110), et un tuyau (142) allant de l'échangeur de chaleur à la cuve permettant de faire avancer le produit pâteux (104) de l'échangeur de chaleur (110) à la cuve (108).
